# EUROPEAN PATENT APPLICATION

(11) **EP 3 462 273 A1**
(43) Date of publication of application: **03.04.2019**
(21) Application number: 17397529.3
(22) Date of filing: 14.12.2017
(51) Int. Cl.: G05D 23/19, F24F 11/00

(54) **STAND-ALONE PROGRAMMABLE ROTARY THERMOSTAT AND METHOD FOR TRANSMITTING HEATING DATA TO THE THERMOSTAT**

(30) Priority: 27.09.2017 NO 20171547
(71) Applicant: Taelek Oy, 14500 Iittala (FI)
(72) Inventor: Ristimäki, Tapio, 14500 Iittala (FI)
(74) Representative: Salomäki, Juha Kari Ensio

(57) **Abstract**

Stand-alone programmable rotary thermostat and method for transmitting heating data to the thermostat. Stand-alone programmable rotary thermostat comprises an antenna for receiving heating data, digital means for storing and processing the received the heating data and a real-time clock. The rotary thermostat is a display-less type programmable rotary thermostat.

## Description

The present invention relates to a stand-alone programmable rotary thermostat as defined in the preamble of claim 1 and method for transmitting heating data to the thermostat as defined in the preamble of claim 7.

The invention in question relates to a stand-alone programmable rotary thermostat which is display-less type thermostat, and which configuration can be performed entirely or at least mostly with a mobile device. The structure of this thermostat typically consists of a rotary knob, a power source, a temperature sensor, an antenna, a microcontroller that incorporates RF functionality, a data storage, a relay, a potentiometer and a led indicator.

The invention in question relates also to a method for transmitting heating data, which heating data can be for example a weekly heating program, to the thermostat. Typically, the heating data comprises at least one or more sets of heating instructions, which instruction comprises a target thermostat identification information, date information, starting time information, finishing time information and a target temperature information. The heating data will be received to a mobile application and transmitted from the mobile application to the display-less rotary thermostat. The heating data can be received directly from a user utilizing a mobile device user interface or the heating data can be formed and optimized by the mobile device application based for example on an electricity spot prices data the mobile device receives through the internet. The principle purpose of the invention is to make it possible to offer the features of a smart programmable thermostat in a stand-alone rotary thermostat equipped with a very limited user interface. The rotary thermostat and the method according to the invention, later called also as the solution, is used to regulate an electric heating device temperature. An electric heating device controlled by the rotary thermostat may be separate from the thermostat or the thermostat may be housed into one entity with the heater. The electric heating device can be for example a room or space heater or a floor heating arrangement.

It is known, and also mainly done, to control a heating device, that heats a space or room or floor, with a thermostat. A thermostat switches the heater on when it is too cold in the space and switches the heater off when it is too hot in the space or floor. A thermostat may also use more sophisticated control algorithms, in which case the heater is switched on and off quickly to achieve an even temperature. The user sets the desired target temperature on the thermostat. With reverse functionality a thermostat may also be used to control cooling of a space. Lowest-priced thermostats are based on the thermal expansion of different metals (bimetal thermostats), middle-priced thermostats are based on a relay that is controlled with analog electronics or a semiconductor, and the most expensive thermostats are microprocessor-controlled. In the lowest-priced thermostats, the user sets a target temperate with a physical rotary knob and the most expensive thermostats have a display unit.

It is also known that a thermostat is a smart thermostat. The most important additional feature of a smart thermostat is a programmable target temperature that varies with the day of the week and time of day. With a varying target temperature, the user can save energy costs of the heating. Smart thermostats typically additionally include a large number of configuration possibilities.

It is also known that regulation of the temperature is a part of a home automation system. In these kinds of systems, the settings are made through the home automation system and any room unit receives instructions through the home automation system.

It is also known that a stand-alone thermostat with a display has a wireless connection to a mobile device. In these known solutions, the user can set some of the settings directly with the thermostat's display unit and some or all settings also with a mobile device.

It is also known that a thermostat can be connected to the internet or a home network. A terminal device, which is connected to the same internet or the home network as the thermostat, can control and adjust the configurations of such thermostat.

From EP2733562 A2 is known that a heating system comprises a means to utilize electricity spot prices to optimize the electricity consumption costs in a certain type central heating arrangement. However, the presented prior art solution is not suitable for example to the space heating solutions where a heater to be controlled is mounted in a heat storage element which is poorly insulated from the heated space such as a concrete floor. Thus, the device according to the present invention is capable of optimizing energy consumption in a floor mounted space heater, where the prior art solution optimizes only the use of energy in central heating boilers. In poorly isolated masses such as floors, the above-described method of prior art is not suitable at all. Instead, the energy price considerations must be combined with the user's defined minimum room / floor temperature at an hourly level, so that the temperature never goes below user's minimum level. In addition, the prior art solution does not take into account the user's weekly program that makes it possible to reduce energy usage, in which case the thermostat knows when and how much the temperature can drop.

From another prior art publication, US8550369 B2 is known a method, where the rotary thermostat interacts with a user wirelessly via the mobile devices such as smart phones or laptops and transmits heating data from the mobile device to the thermostat. However, this publication does not introduce solution regarding absence of a display unit, which is an inventive detail in the present invention. Vice versa this prior art publication bases on servo controlled rotary knob which comprises mechanical display functionality by itself.

The problem with the known solutions is that they are either stand-alone rotary thermostats equipped with very limited features, expensive smart thermostats equipped with a display unit, thermostats without possibility locally give target temperature or thermostats that require a large automation system and/or home network to function. Among the known solutions, the affordable, stand-alone rotary thermostats without displays do not have smart thermostat features, like programmability, especially weekly programming feature. Offering smart thermostat features in thermostats in the lower-priced category would allow a significantly higher number of end users to have the energy-saving features of the efficient heating. Incorporating the features of smart thermostats in lower-priced thermostats would give a competitive advantage to the producer of the product.

In addition to the aforementioned, the European Ecodesign 1188/2015 regulation requires programmable functionalities for all new thermostats in EU market area. All present programmable thermostats comprise display unit, which increases manufacturing costs and selling price of thermostats.

One objective of the present invention is to eliminate drawbacks of prior art technology and to achieve a reliable, easy-to-operate and inexpensive stand-alone programmable display-less rotary thermostat equipped with a very limited user interface still having the features of smart thermostats, particularly the weekly programming feature. It has a direct wireless connection to a mobile device utilizing applicable standard like Bluetooth, Wi-Fi, or mobile networks particularly for sending heating data, like a week program to the thermostat. Only limited settings of a thermostat, like a base target temperature, can be adjusted directly from the device itself, and the majority of the settings can only be adjusted through a mobile device.

The stand-alone programmable display-less rotary thermostat according to the invention is characterized by what is disclosed in the characterization part of claim 1 and the method for transmitting heating data to the thermostat is characterized by what is disclosed in the characterization part of claim 7. Other embodiments of the invention are characterized by what is disclosed in the other claims.

Stand-alone programmable rotary thermostat according to the invention comprises an antenna for receiving heating data, digital means for storing and processing the received the heating data and a real-time clock. The rotary thermostat is a display-less type programmable rotary thermostat. Method for transmitting a data to the stand-alone programmable rotary thermostat comprises a mobile device, a mobile device application, a heating data, an electric heating device, a stand-alone programmable rotary thermostat, which rotary thermostat comprises an antenna for receiving heating data, digital means for storing and processing the received heating data and a real-time clock. The electric heating device comprises a display-less rotary thermostat, which receives the heating data from the mobile device application.

In order to achieve the objectives mentioned above, the present invention provides a stand-alone programmable display-less rotary thermostat still having the features of more expensive programmable smart thermostats.

One advantage of the solution according to the invention is, that the thermostat device is simple and inexpensive to manufacture which gives competitive advantage to its manufacturer and savings to end users as well.

Another advantage of the solution according to the invention is that the adjustment of the thermostat is made via mobile device by a user or automatically by an application, which run in a background and utilizes electricity spot prices to optimize the energy costs.

Yet another advantage of the solution according to the invention is that this affordable stand-alone, display-less thermostat device also complies the European Ecodesign 1188/2015 regulation.

In the following, the invention will be described in detail by the aid of example embodiments by referring to the attached simplified and diagrammatic drawings, wherein
- Fig. 1: presents in a simplified and diagrammatic front view a stand-alone programmable rotary thermostat according to the invention,
- Fig. 2: presents in a simplified and diagrammatic oblique view a user adjusting a temperature to the thermostat of a heating device,
- Fig. 3: presents in a simplified and diagrammatic front view a mobile device and a mobile device application, and
- Fig. 4: presents in a simplified and diagrammatic oblique view an automatic heating data transmission in a floor heating arrangement.

An aspect of the invention is to achieve an inexpensive and easy solution and arrangement that complies present thermostat regulations.

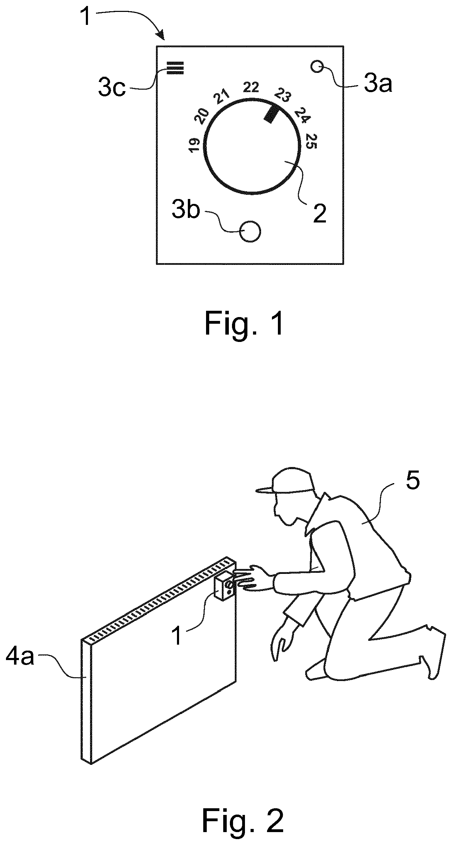

Figure 1 presents in a simplified and diagrammatic front view a stand-alone programmable rotary thermostat 1 according to the invention. The user interface of the thermostat 1 comprises a rotary knop 2 with a temperature scale, temperature sensor 3c and indicator elements 3a and 3b, like illuminating leds, which indicator element 3b indicates the user when the thermostat 1 is overriding the physical settings of the thermostat's rotary knob 2 and uses the programmed heating data instead. Noticeable is, that the thermostat 1 is a programmable smart thermostat, but it has no display, which reduces this thermostat 1 manufacturing costs remarkably.

Inside the thermostat's 1 case there are means taking care of the functions of the smart thermostat. These means are typically a power source, a temperature sensor 3c (this sensor may also be wired and located for example on a floor heating element), an antenna, a microcontroller that incorporates RF function, a data storage, a relay and a potentiometer. The thermostat 1 receives heating data from a mobile device, which heating data comprises for example a week heating program, a day heating program or other thermostat 1 setting data. The microcontroller communicates with the mobile device via an antenna connected to an internal RF circuit. The heating data sent by/from the mobile device is stored into the permanent memory of the microcontroller. The time information is stored into the real-time clock. The microcontroller measures real temperature data with sensors 3c. The microcontroller measures the target temperature set by the user with the rotary knob 2 potentiometer and decides whether to switch the relay on or off based on the following: the target temperature, sensor 3c measurements, received heating data, time of real-time clock, temperature control algorithm and other settings. The thermostat's 1 indicator element 3a indicates the state of the relay to the user.

Figure 2 presents in a simplified and diagrammatic oblique view a user 5 adjusting a temperature to the thermostat of a heating device, in this case a wall heater 4a.

The user 5 sets the target temperature of the wall heater 4a with the rotary knob 2. Advantageously, the base temperature is a so-called comfortable temperature, which applies when there are human beings present in the room or space. This base temperature is effective when there is no other heating data set in the thermostat 1 and thus the indicator element 3b is not illuminating indicating the base temperature is effective. The base temperature is set physically / manually using the rotary knob 2 of the thermostat 1 of the wall heater 4a.

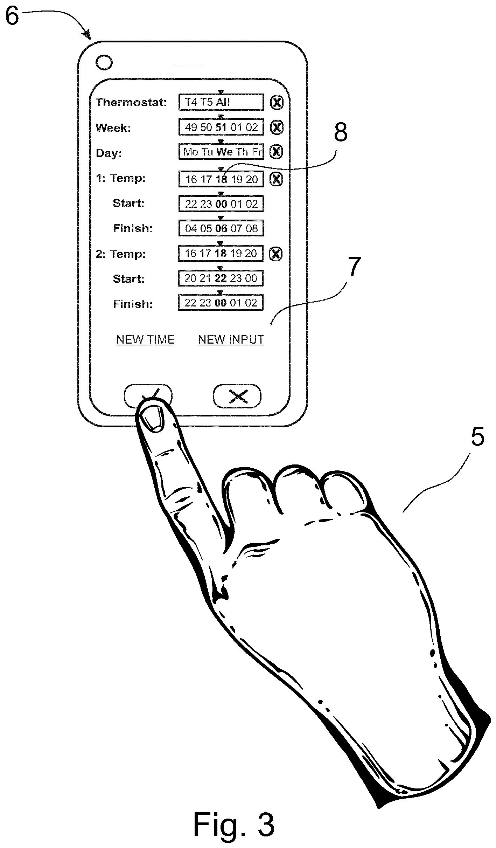

Figure 3 presents in a simplified and diagrammatic front view a mobile device 6 and a mobile device application 7. The mobile device 6, such as a smart phone, tablet computer or other portable PC comprises the special mobile device application 7 which creates heating data messages and transmits the heating data messages to the thermostat 1. The mobile device application 7 receives the heating data from the user 5, who inputs the heating data 8 using the mobile device 6 user interface, like a touch screen.

The heating data 8 comprises one or more sets of parameters, where one set of parameters comprises target thermostat identification information, date information, target temperature information, starting time information and finishing time information. The mobile device application 7 collects the parameter sets and creates the heating data 8 to be transmitted to the thermostat 1. The heating data 8 can for example comprise a week heating schedule. Advantageously, the thermostat 1 may have means to transmit the heating data 8 forward to the next or other thermostat or thermostats. The thermostat 1 uses the same means to receive the heating data 8 from another thermostat 1 than receiving the heating data 8 from the mobile device 6.

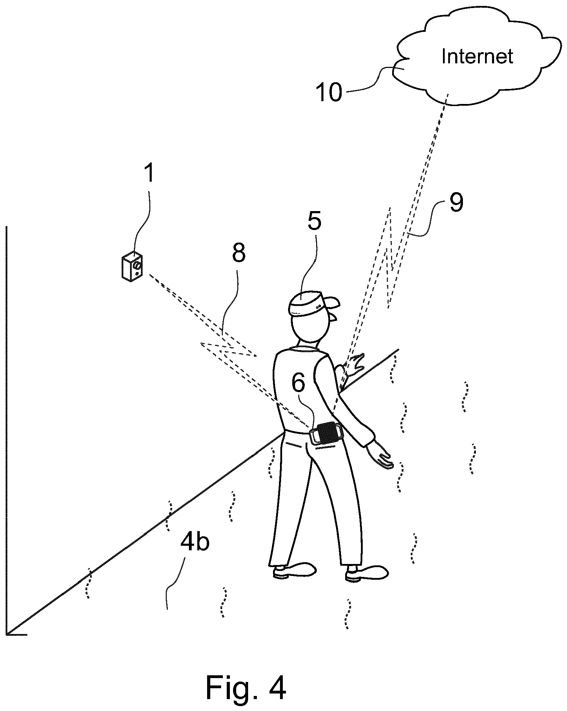

Figure 4 presents in a simplified and diagrammatic oblique view an automatic heating data 8 transmission in a floor heating arrangement, which comprises the thermostat 1 and electric heating elements 4b inside the floor.

Another method for creating the heating data 8 is an automatic heating data 8 formed by the mobile device application 7. For example, the mobile device application 7, which is running automatically at the background in a mobile device 6, downloads hourly based electric spot prices 9 for the next day through the internet. Based on predetermined target temperature set by the user 5 and hourly based electric spot prices 5, the mobile device application 7 forms cost optimized heating data 8 for the next day. The mobile device application 8 transmits the cost optimized heating data 8 automatically to the thermostat 1 as soon as the mobile device 6 is in the thermostat's data connection range. The thermostat 1 controls the floor heating elements 4b maintaining the target temperature, but in a cost optimized way.

It is obvious to the person skilled in the art that the invention is not restricted to the examples described above but that it may be varied within the scope of the claims presented below. Thus, for instance, the standard and protocol used in transmitting the heating data may vary.

It is also obvious to the person skilled in the art that the thermostat may also read the position of the knob with sensors other than a potentiometer. There may be several different internal and external measuring sensors in the thermostat. The power source of the thermostat may be, for instance, a switched-mode power supply that produces DC voltage from mains power, a capacitor dropper or battery. The permanent memory can be an internal or external feature of the microcontroller. The radio circuit may entirely or partly be an external implementation of the microcontroller. Instead of a traditional relay, a semi-conductor relay or other semiconductor may be used, and this is what is typically done, for instance in heating radiator thermostats. The knob may be a large ring such as in figure 1, or a very small one. The thermostat may have zero, one or several indication elements, like illuminating led lights.

It is further obvious to the person skilled in the art that the mobile device or the mobile device application may vary what is presented above. Thus, for instance, the mobile device application may comprise other additional functionalities for controlling the thermostat.

## Claims

1. Stand-alone programmable rotary thermostat comprising an antenna for receiving heating data, digital means for storing and processing the received the heating data and a real-time clock, **characterized in that** the rotary thermostat is a display-less type programmable rotary thermostat.

2. Stand-alone programmable rotary thermostat according to claim 1, **characterized in that** the heating data comprises one or more sets of heating parameters, which set of parameters comprises target thermostat identification information, date information, target temperature information, starting time information and finishing time information.

3. Stand-alone programmable rotary thermostat according to claim 1 or 2, **characterized in that** the rotary thermostat comprises means to receive the heating data send via Bluetooth and/or WiFi and/or and/or mobile network standards.

4. Stand-alone programmable rotary thermostat according to claim 1, 2 or 3, **characterized in that** the rotary thermostat is an electric heating device rotary thermostat.

5. Stand-alone programmable rotary thermostat according to claim 4, **characterized in that** the electric heating device is a floor heating arrangement.

6. Stand-alone programmable rotary thermostat according to any of the claims above, **characterized in that** the heating data received, is a cost optimized heating data which is based on electricity spot prices.

7. Stand-alone programmable rotary thermostat according to any of the claims above, **characterized in that** the rotary thermostat comprises a means to receive the heating data from a mobile device.

8. Stand-alone programmable rotary thermostat according to any of the claims above, **characterized in that** the rotary thermostat comprises a means to transmit the heating data to other/next display-less rotary thermostat.

9. Stand-alone programmable rotary thermostat according to any of the claims above, **characterized in that** the rotary thermostat comprises a physical means to adjust the temperature directly from the thermostat and an indicator, which indicates when the thermostat uses the received heating data, overriding the thermostat's physical temperature setting.

10. Method for transmitting a data to a stand-alone programmable rotary thermostat, which method comprises a mobile device, a mobile device application, a heating data, an electric heating device, a stand-alone programmable rotary thermostat, which rotary thermostat comprises an antenna for receiving heating data, digital means for storing and processing the received heating data and a real-time clock, **characterized in that** the electric heating device comprises a display-less rotary thermostat which receives the heating data from the mobile device application.

11. Method according to claim 10, **characterized in that** the mobile device application receives the heating data from a user via a mobile device user interface.

12. Method according to claim 10 or 11, **characterized in that** the mobile device application forms and optimizes the heating data based on electricity spot prices data the mobile device receives from the internet.

13. Method according to claim 10, 11 or 12, **characterized in that** the mobile device application runs automatically in the background of the mobile device, and that the application forms and optimizes online the updated heating data based on electricity spot prices data the mobile device receives from the internet, and that the application automatically transmits the updated heating data to the display-less rotary thermostat when it is in the mobile device data connection range.

14. Method according to any of the preceding claims 10-13, **characterized in that** the display-less rotary thermostat transmits the received heating data to other/next display-less rotary thermostat / thermostats in data connection range.
